# EUROPEAN PATENT SPECIFICATION

(11) **EP 4 186 719 B1**
(45) Date of publication and mention of the grant of the patent: **11.02.2026**
(21) Application number: 22171969.3
(22) Date of filing: 06.05.2022
(51) Int. Cl.: B60D 1/06, B60D 1/54

(54) **TRAILER HITCH COUPLER**
ANHÄNGERKUPPLUNG
COUPLEUR D'ATTELAGE DE REMORQUE

(30) Priority: 30.11.2021 CN 202111443597; 30.11.2021 CN 202122994950 U
(43) Date of publication of application: 31.05.2023
(73) Proprietor: Zhejiang Zhiyou Automotive Technology Co., Ltd., Zhejiang, Shaoxing 312500 (CN)
(72) Inventor: Xu, Naiyong, Shaoxing, 312500 (CN); Wang, Yu, Shaoxing, 312500 (CN); Shao, Junjian, Shaoxing, 312500 (CN); Xuan, Quanli, Shaoxing, 312500 (CN); Zhang, Dongyu, Shaoxing, 312500 (CN); Zhu, Fengdong, Shaoxing, 312500 (CN); Ding, Wenbing, Shaoxing, 312500 (CN); Wu, Binbin, Shaoxing, 312500 (CN); Sun, Lingxin, Shaoxing, 312500 (CN)
(74) Representative: karo IP

(56) References cited:
- EP-A1- 1 637 364
- WO-A1-2018/133888
- DE-A1- 102008 032 229

## Description

### FIELD

Embodiments of the present disclosure relate to the field of automobile technologies, and more particularly relate to a trailer hitch coupler.

### BACKGROUND

People's demands on vehicle hitching performance increase with their pursuit of a more diversified way of life. A conventional trailer hitch coupler additionally mounted to a vehicle comprises a body and a hitch, wherein the body is secured on a vehicle body of the vehicle; a rotating shaft for actuating the hitch to rotate synchronously is provided on the body. Dependent on actual needs, the hitch is rotated beneath the vehicle body to a folded position or rotated out of the vehicle body to an unfolded position for hitching. However, in the prior art, there is no locking mechanism to lock the rotating shaft to prevent it from rotation when the hitch is in the unfolded position, such that sway likely occurs when the hitch is attached with a trailer, which deteriorates hitching performance of the trailer hitch coupler. DE 10 2008 032 229 A1 and EP 1 673 364 A1 apply to trailor hitch couplers with locking mechanism.

### SUMMARY

To overcome the above and other drawbacks in the prior art, embodiments of the present disclosure provide a trailer hitch coupler, which is capable of locking a hitch at a folded position or at a unfolded position so as to prevent sway of the hitch, thereby enhancing hitching performance of the trail hitch coupler.

Embodiments of the present disclosure provide:
a trailer hitch coupler, comprising: a body mounted to a vehicle body and a hitch, wherein the body comprises a driving shaft, a driven shaft, a transmission disc, and at least two claws rotatably mounted; at least two pairs of locking slots that correspond to the claws in a one-to-one manner and block non-corresponding claws to be snapped into are provided at an outer circumferential side of the driven shaft, each pair of the locking slots being distributed symmetrically about the center of the driven shaft; the driven shaft drives the hitch to rotate; the transmission disc is provided with toggle blocks in one-to-one correspondence with the claws; the driving shaft actuates the transmission disc to idle such that the toggle blocks push the claws to be released out of the locking slots to thereby unlock the driven shaft to rotate; after the claws unlock the driven shaft to rotate, the driving shaft drives, via the transmission disc, the driven shaft to rotate so as to switch the hitch between a folded position and an unfolded position; and the body further comprises resilient members for driving the claws to reset, wherein when the hitch is in the folded position or the unfolded position, the resilient members actuate the claws to reset so as to snap the claws in the corresponding locking slots, thereby locking the driven shaft from rotation.

Furthermore, according to the invention each of the claws includes a sectorial plate, wherein radial fitting depths of at least two sectorial plates as well as their corresponding locking slots are mutually different; and wherein in each of the locking slots is provided a fool-proof boss extending axially from one end of the locking slot towards inside of the locking slot, and a fool-proof cavity fitted with the sectorial plate is formed between the fool-proof boss and the other end of the locking slot, an axial depth of the fool-proof cavity and a thickness of the sectorial plate decrease with increase of the corresponding radial fitting depth.

Furthermore, the body further comprises a fixing sleeve sleeved over the driven shaft and mounted to the vehicle body; the claws are rotatably mounted on the fixing sleeve; and each of the claws further comprises a stressed portion projecting from a sectorial surface of a side of the sectorial plate facing away from the fixing sleeve, wherein the stressed portion extends towards an axial direction of the driven shaft to block partial end face of the driven shaft; wherein the corresponding toggle block pushes the stressed portion to release the sectorial plate out of the corresponding locking slot.

Furthermore, the driven shaft has a shoulder extending radially outwardly; a damping ring is provided at one of the shoulder and the fixing sleeve, and a spring is provided at the other one of the shoulder and the fixing sleeve, a steel ball being press-fitted between the spring and the damping ring.

Furthermore, the driven shaft has a shoulder extending radially outwardly, a perforation and a pin slidably mounted in the perforation are provided on the shoulder, a first positioning groove is provided on the fixing sleeve, and a second positioning groove is provided on the transmission disc such that when the transmission disc is idling, one end of the pin is inserted in the first positioning groove so as to circumferentially position the driven shaft, and when the transmission disc drives the driven shaft to rotate, the other end of the pin is inserted in the second positioning groove so as to lock a relative position between the transmission disc and the driven shaft.

Furthermore, a limit groove is provided at one of an inner circumferential side of the fixing sleeve and an outer circumferential side of the driven shaft, and a limit boss inserted into the limit groove is provided at the other one of the inner circumferential side of the fixing sleeve and the outer circumferential side of the driven shaft, wherein the limit boss moves between two ends of the limit groove.

Furthermore, a transmission post is provided on the transmission disc, and an arc-shaped transmitting groove is provided coaxially on the driven shaft, wherein the transmission post is inserted into the arc-shaped transmitting groove, such that when the transmission disc drives the transmission post to move from a middle portion of the arc-shaped transmitting groove to an end portion of the arc-shaped transmitting groove, the claws are released out of their corresponding slots.

Furthermore, the body comprises a housing and a motor assembly disposed in the housing, wherein the driving shaft, the transmission disc, and the claws are disposed in the housing, and the motor assembly actuates the driving shaft to rotate; wherein one end of the driven shaft is disposed in the housing, and the other end of the driven shaft extends outside of the housing to connect with the hitch.

Furthermore, the body comprises a housing that covers outside of the transmission disc and the claws, wherein one end of the driven shaft is disposed in the housing, and the other end of the driven shaft extends outside of the housing to connect with the hitch; wherein one end of the driving shaft is disposed in the housing, and the other end of the driving shaft extends out of the housing.

The present disclosure offers the following beneficial effects:

According to the present disclosure, the locking slots may block non-corresponding claws from being snapped into, which achieves an effect of one-to-one fitting between the claws and the locking slots, thereby ensuring locking of the rotated driven shaft at the stop position. To use the trailer hitch coupler, the driving shaft first actuates the transmission disc to idle such that the toggle blocks push the claws to be released out of the locking slots to thereby unlock the driven shaft to rotate, during which process the driven shaft does not rotate; after the claws unlock the driven shaft to rotate, the driving shaft may drive, via the transmission disc, the driven shaft to rotate to switch the hitch between the folded position and the unfolded position; since each pair of the locking slots are distributed symmetrically about the center of the driven shaft, when the driven shaft rotates by 180° till the folded position or the unfolded position, the claws are automatically reset under the acting force of the resilient members and snapped into the corresponding locking slots to lock the driven shaft from rotation, which ensures the locked status of the hitch and prevents sway of the hitch when hitching a trailer or when being received, thereby further enhancing hitching performance of the trailer hitch coupler; additionally, since the claws and the corresponding slots are in one-to-one fitting, an additional positioning mechanism is eliminated for circumferentially positioning the driven shaft, thereby rendering a simplified structure.

Each of the claws includes a sectorial plate, wherein radial fitting depths of at least two sectorial plates as well as their corresponding locking slots are mutually different; in each of the locking slots is provided a fool-proof boss extending axially from one end of the locking slot towards the inside of the locking slot, and a fool-proof cavity fitted with the sectorial plate is formed between the fool-proof boss and the other end of the locking slot, wherein an axial depth of the fool-proof cavity and a thickness of the sectorial plate decrease with increase of the corresponding radial fitting depth. Such a configuration may block a sectorial plate from being snapped into a locking slot with a radial fitting depth smaller than that of its corresponding locking slot, while configuration of the fool-proof boss may block a sectorial plate from being snapped into a locking slot with a radial fitting depth greater than that of its corresponding locking slot, thereby achieving a one-to-one fitting effect between the claws and the locking slots.

The driven shaft has a shoulder extending radially outwardly; a damping ring is provided at one of the shoulder and the fixing sleeve, and a spring is provided at the other one of the shoulder and the fixing sleeve, a steel ball being press-fitted between the spring and the damping ring. Such a configuration increases the resistance applied to the rotating driven shaft via the damping force between the steel ball and the damping ring, thereby preventing the hitch from falling due to its own weight.

The driven shaft has a shoulder extending radially outwardly, a perforation and a pin slidably mounted in the perforation are provided on the shoulder, a first positioning groove is provided on the fixing sleeve, and a second positioning groove is provided on the transmission disc, such that when the transmission disc is idling, one end of the pin is inserted in the first positioning groove so as to circumferentially position the driven shaft; and when the transmission disc drives the driven shaft to rotate, the other end of the pin is inserted in the second positioning groove so as to lock a relative position between the transmission disc and the driven shaft. Such a configuration enables circumferential positioning of the driven shaft via the pin, which may prevent the hitch from falling due to its own weight.

A limit groove is provided at one of an inner circumferential side of the fixing sleeve and an outer circumferential side of the driven shaft, and a limit boss inserted into the limit groove is provided at the other one of the inner circumferential side of the fixing sleeve and the outer circumferential side of the driven shaft, wherein the limit boss moves between two ends of the limit groove. Such a configuration may limit a rotating angle of the driven shaft so as to define an initial position and an end position of the driven shaft, and may also be applied to reset the driven shaft after an emergency stop.

A transmission post is provided on the transmission disc, and an arc-shaped transmitting groove is coaxially provided on the driven shaft, wherein the transmission post is inserted into the arc-shaped transmitting groove, such that when the transmission disc drives the transmission post to move from a middle portion of the arc-shaped transmitting groove to an end portion of the arc-shaped transmitting groove, the claws are released out of the locking slots. With such a configuration, when the transmission disc is driving the transmission post to move from the middle portion of the arc-shaped transmitting groove to an end portion of the arc-shaped transmitting groove, idling of the transmission disc may be realized, at which point the driven shaft does not rotate; when the transmission post moves to the end portion of the arc-shaped transmitting groove, the claws unlock the driven shaft to rotate, at which point the driven shaft may rotate; then the transmission disc is continuously driven to rotate to enable the transmission post to drive the driven shaft to rotate, thereby realizing switching of the hitch between the folded position and the unfolded position; when the transmission post is moving from the end portion of the arc-shaped transmitting groove to the middle portion of the arc-shaped transmitting groove, the transmission disc is idling, at which point the driven shaft does not rotate; when the transmission post moves to the middle portion of the arc-shaped transmitting groove, the toggle blocks are reset for next initiation.

The body comprises a housing and a motor assembly disposed in the housing, wherein the driving shaft, the transmission disc, and the claws are disposed in the housing; the motor assembly actuates the driving shaft to rotate; wherein one end of the driven shaft is disposed in the housing, and the other end of the driven shaft extends outside of the housing to connect with the hitch. With the motor assembly actuating the driving shaft to rotate, user experience may be enhanced.

The body comprises a housing that covers outside of the transmission disc and the claws, wherein one end of the driven shaft is disposed in the housing, and the other end of the driven shaft extends outside of the housing to connect with the hitch; wherein one end of the driving shaft is disposed in the housing, and the other end of the driving shaft extends outside of the housing. With such a configuration, the driving shaft may also be actuated to rotate when a user rotates the end of the driving shaft extending outside of the housing by a wrench or by bare hands, which eliminates a need for a motor assembly, thereby reducing manufacturing cost of the product; furthermore, without the motor assembly, failure of the product due to electric fault may be avoided.

These characteristics and advantages of the present disclosure will be disclosed in detail in the preferred embodiments below with reference to the accompanying drawings.

### BRIEF DESCRIPTION OF THE SEVERAL VIEWS OF THE DRAWINGS

Hereinafter, the present disclosure will be described in further detail with reference to the accompanying drawings:
Fig. 1 is an exploded structural view of a trailer hitch coupler according to a first embodiment of the present disclosure;
Fig. 2 is a partial structural sectional view of the trailer hitch coupler having been mounted to a vehicle body in the first embodiment of the present disclosure;
Fig. 3 is a structural schematic diagram of a transmission disc, a driven shaft, and claws in the first embodiment of the present disclosure;
Fig. 4 is a sectional view of the fixing sleeve, the driven shaft, and the claws, which have been assembled, in the first embodiment of the present disclosure;
Fig. 5 is a sectional view of the fixing sleeve, the driven shaft, the transmission disc, and the claws, which have been assembled, in the first embodiment of the present disclosure;
Fig. 6 is a simplified view of fitting between the driven shaft, the transmission disc, and the claws when the driven shaft is in a folded position in the first embodiment of the present disclosure;
Fig. 7 is a status diagram showing that toggle blocks push the claws out of the locking slots in the first embodiment of the present disclosure;
Fig. 8 is a simplified diagram of fitting between the driven shaft, the transmission disc and the claims when the driven shaft is in an unfolded position in the first embodiment of the present disclosure;
Fig. 9 is a status diagram showing that the transmission disc has idled by 30° when the driven shaft is in the unfolded position in the first embodiment of the present disclosure;
Fig. 10 is a status diagram of a pin when the transmission disc is idling in the first embodiment of the present disclosure;
Fig. 11 is a status diagram of the pin when the transmission disc drives the driven shaft to rotate in the first embodiment of the present disclosure;
Fig. 12 is a local sectional view of the trailer hitch coupler in a second embodiment of the present disclosure.

### Reference Numerals:

01. anti-collision beam; 100. hitch; 220. driving shaft; 300. claw; 310. first claw; 311. first sectorial plate; 312: first stressed portion; 320. second claw; 321. second sectorial plate; 322. second stressed portion; 330. third claw; 331. third sectorial plate; 332. third stressed portion; 400. transmission disc; 410. toggle block; 420. transmission post; 430. second positioning groove; 500. driven shaft; 510. first fool-proof boss; 520. second fool-proof boss; 530. third fool-proof boss; 540. arc-shaped transmitting groove; 550. limit boss; 560. shoulder; 561. pin; 600. fixing sleeve; 610. plug; 620. torsion spring; 630. limit groove; 640. first positioning groove; 650. damping ring; 700. housing; 800. cover plate; 900. motor assembly.

### DETAILED DESCRIPTION

Embodiments of the present disclosure disclose a trailer hitch coupler, comprising: a body mounted to a vehicle body and a hitch, wherein the body comprises a driving shaft, a driven shaft, a transmission disc, and at least two claws rotatably mounted; at least two pairs of locking slots that correspond to the claws in a one-to-one manner and block non-corresponding claws to be snapped into are provided at an outer circumferential side of the driven shaft, each pair of the locking slots being distributed symmetrically about the center of the driven shaft; the driven shaft drives the hitch to rotate; the transmission disc is provided with toggle blocks in one-to-one correspondence with the claws; the driving shaft actuates the transmission disc to idle such that the toggle blocks push the claws to be released out of the locking slots to thereby unlock the driven shaft to rotate; after the claws unlock the driven shaft to rotate, the driving shaft drives, via the transmission disc, the driven shaft to rotate so as to switch the hitch between a folded position and a unfolded position; and the body further comprises resilient members for driving the claws to reset, wherein when the hitch is in the folded position or the unfolded position, the resilient members actuate the claws to reset so as to snap the claws in the corresponding locking slots, thereby locking the driven shaft from rotation.

In the present disclosure, the locking slots may block non-corresponding claws from being snapped into, which achieves an effect of one-to-one fitting between the claws and the locking slots, thereby ensuring locking of the rotated driven shaft at the stop position. To use the trailer hitch coupler, the driving shaft first actuates the transmission disc to idle such that the toggle blocks push the claws to be released out of the locking slots to thereby unlock the driven shaft to rotate, during which process the driven shaft does not rotate; after the claws unlock the driven shaft to rotate, the driving shaft may drive, via the transmission disc, the driven shaft to rotate to switch the hitch between the folded position and the unfolded position; since each pair of the locking slots are distributed symmetrically about the center of the driven shaft, when the driven shaft rotates by 180° till the folded position or the unfolded position, the claws are automatically reset under the acting force of the resilient members and snapped into the corresponding locking slots to lock the driven shaft from rotation, which ensures the locked status of the hitch and thereby prevents sway of the hitch when hitching a trailer or when being received, thereby further enhancing hitching performance of the trailer hitch coupler; additionally, since the claws and the corresponding slots are in one-to-one fitting, an additional positioning mechanism is eliminated for circumferentially positioning the driven shaft, thereby further simplifying the structure.

Hereinafter, the technical solutions of the present disclosure will be explained and illustrated through embodiments with reference to the accompanying drawings.

### First Embodiment

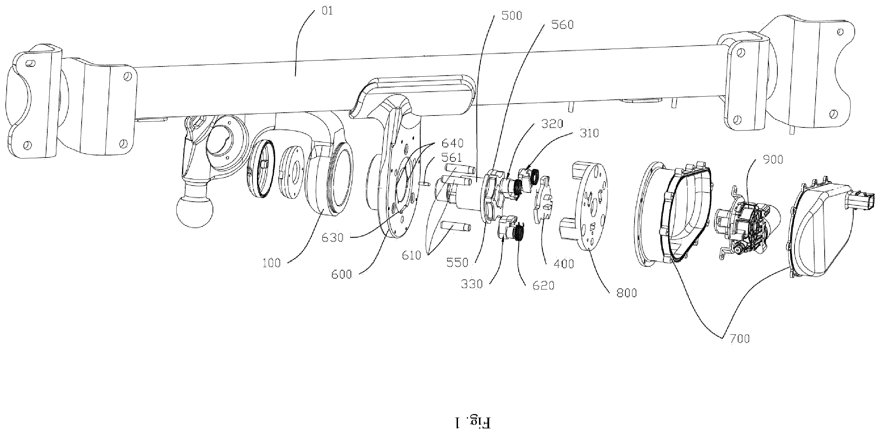

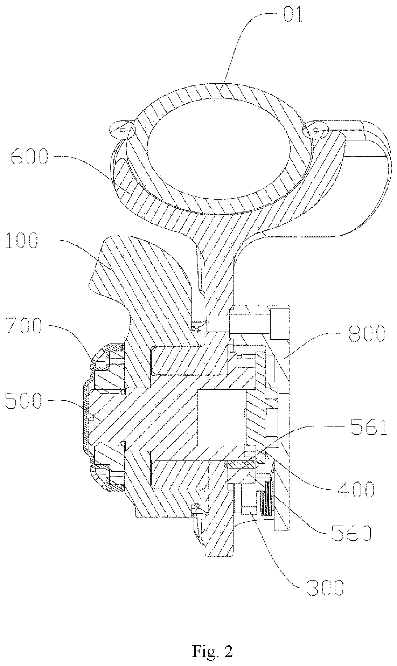

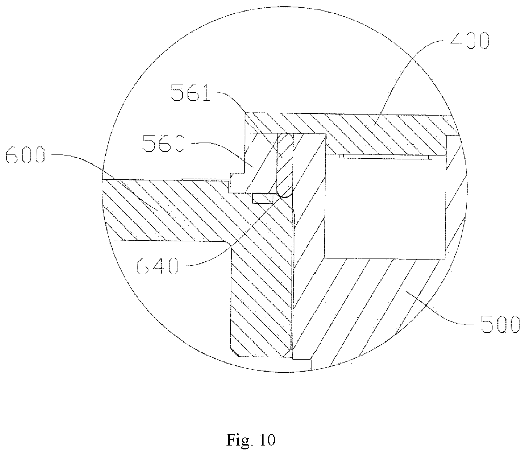

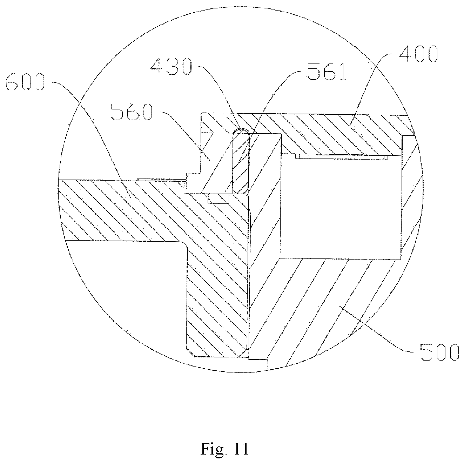

In the embodiment illustrated in Figs. 1 to 11, the trailer hitch coupler comprises a body and a hitch 100, the body being mounted to an anti-collision beam 01 of a vehicle body, wherein the body comprises: a driving shaft 200, claws 300, a transmission disc 400, a driven shaft 500, and a fixing sleeve 600; wherein the fixing sleeve 600 is mounted to the anti-collision beam 01, and the fixing sleeve 600 is sleeved over the driven shaft 500; at least two claws 300 are provided, the at least two claws 300 being circumferentially provided on the fixing sleeve 600 at intervals and surrounding the outside of the driven shaft 500; the claws 300 are rotatably mounted on the fixing sleeve 600; at least two pairs of locking slots which are in one to one correspondence with the claws 300 and block non-corresponding claws 300 from being snapped into are provided at the outer circumferential side of the driven shaft 500, each pair of the locking slots being distributed symmetrically about the center of the driven shaft 500; the driven shaft 500 drives the hitch 100 to rotate; the transmission disc 400 has toggle blocks 410 in one-to-one correspondence with the claws 300; the driving shaft 200 actuates the transmission disc 400 to idle such that the toggle blocks 410 push the claws 300 out of the locking slots to thereby unlock the driven shaft 500 to rotate; after the claws 300 unlock the driven shaft 500 to rotate, the driving shaft 200 drives, via the transmission disc 400, the driven shaft 500 to rotate so as to switch the hitch 100 between a folded position and a unfolded position; wherein when the hitch 100 is in the folded position or the unfolded position, the claws 300 are snapped into the locking slots to lock the driven shaft 500 from rotation.

In this embodiment, the locking slots may block non-corresponding claws 300 from being snapped into, which achieves an effect of one-to-one fitting between the claws 300 and the locking slots, thereby ensuring locking of the rotated driven shaft 500 at the stop position. To use the trailer hitch coupler, the driving shaft 200 first actuates the transmission disc 400 to idle such that the toggle blocks 410 push the claws 300 to be released out of the locking slots to thereby unlock the driven shaft 500 to rotate, during which process the driven shaft 500 does not rotate; after the claws 300 unlock the driven shaft 500 to rotate, the driving shaft 200 may drive, via the transmission disc 400, the driven shaft 500 to rotate to switch the hitch 100 between the folded position and the unfolded position; since each pair of the locking slots are distributed symmetrically about the center of the driven shaft 500, when the driven shaft 500 rotates by 180° till the folded position or the unfolded position, the claws 300 are snapped into the corresponding locking slots to lock the driven shaft 500 from rotation, which ensures the locked status of the hitch 100 and prevents sway of the hitch 100 when hitching a trailer or when being received, thereby further enhancing hitching performance of the trailer hitch coupler; additionally, since the claws 300 and the corresponding slots are fitted in a one-to-one corresponding manner, an additional positioning mechanism is eliminated for circumferentially positioning the driven shaft, rendering a simplified structure.

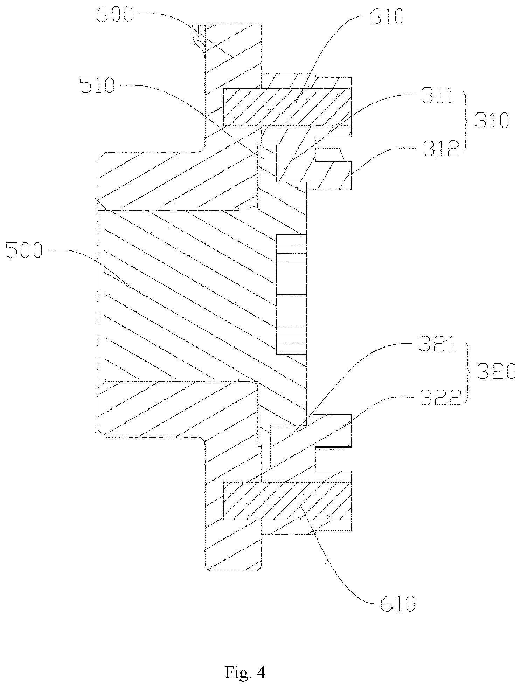

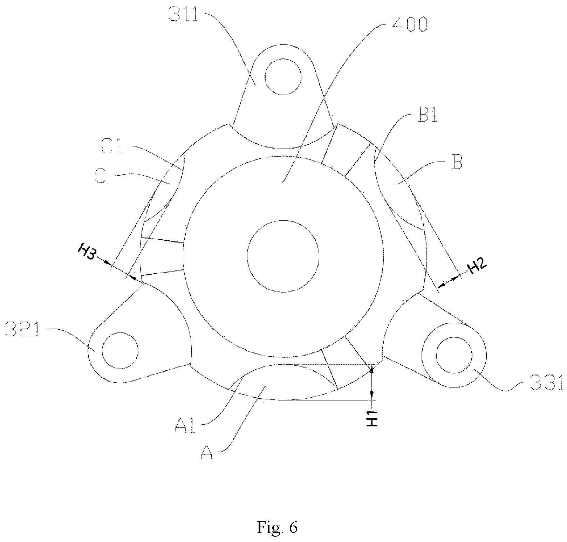

As illustrated in Figs. 4 and 6, in this embodiment, a plug 610 is provided on an end face of the fixing sleeve 600, and the claws 300 are rotatably mounted on the plug 610. Three claws 300 are preferably provided, wherein the three claws 300 are circumferentially distributed on the fixing sleeve 600 at uniform intervals, i.e., the angle between every two neighboring claws 300 is 120°. Three pairs of locking slots are provided at the outer circumferential side of the driven shaft 500, the three pairs of locking slots including a pair of locking slots A, a pair of locking slots B, and a pair of locking slots C, wherein the pair of locking slots A is formed by two locking slots A symmetrically distributed about the center of the driven shaft 500; the pair of locking slots B is formed by two locking slots B symmetrically distributed about the center of the driven shaft 500; and the pair of locking slots C is formed by two locking slots C symmetrically distributed about the center of the driven shaft 500. The three claws 300 comprises a first claw 310, a second claw 320, and a third claw 330, each claw 300 comprising a sectorial plate, i.e., the first claw 310 comprising a first sectorial plate 311, the second claw 320 comprising a second sectorial plate 321, and the third claw 330 comprising a third sectorial plate 331, wherein the locking slot A is matched with the first sectorial plate 311, the locking slot A having a fitting face A1 matched with an arc-shaped surface of the first sectorial plate 311; the locking slot B is matched with the second sectorial plate 321, the locking slot B having a fitting face B1 matched with an arc-shaped surface of the second sectorial plate 321; and the locking slot C is matched with the third sectorial plate 331, the locking slot C having a fitting surface C1 matched with an arc-shaped surface of the third sectorial plate 331. To block the non-corresponding claws 300 from snapping into the locking slots, in this embodiment, the portion of the first sectorial plate 311 snapped in the locking slot A is referred to as the radial fitting depth of the first sectorial plate 311, the radial depth of the locking slot A is referred to as the radial fitting depth of the locking slot A, the radial fitting depth for the first sectorial plate 311 and the locking slot A being denoted as H1; likewise, the portion of the second sectorial plate321 snapped in the locking slot B is referred to as the radial fitting depth of the second sectorial plate 321, the radial depth of the locking slot B is referred to as the radial fitting depth of the locking slot B, the radial fitting depth for the second sectorial plate 321 and the locking slot B being denoted as H2; and the portion of the third sectorial plate 331 snapped in the locking slot C is referred to as the radial fitting depth of the third sectorial plate 331, the radial depth of the locking slot C is referred to as the radial fitting depth of the locking slot C, the radial fitting depth for the third sectorial plate 331 and the locking slot C being denoted as H3; wherein the radii of the first sectorial plate 311, second sectorial plate 321, and third sectorial plate 331 are identical; in this case, by adjusting the distances between the respective rotating lines of the first sectorial plate 311, second sectorial plate 321, and third sectorial plate 331, and an axial line of the driven shaft 500 to be mutually unequal, H1≠H2≠H3 is realized. To facilitate subsequent description, in this embodiment, H1>H2>H3; in this way, the first sectorial plate 311 may be blocked from being snapped into the locking slot B and the locking slot C, and the second sectorial plate 321 may be blocked from being snapped into the locking slot C.

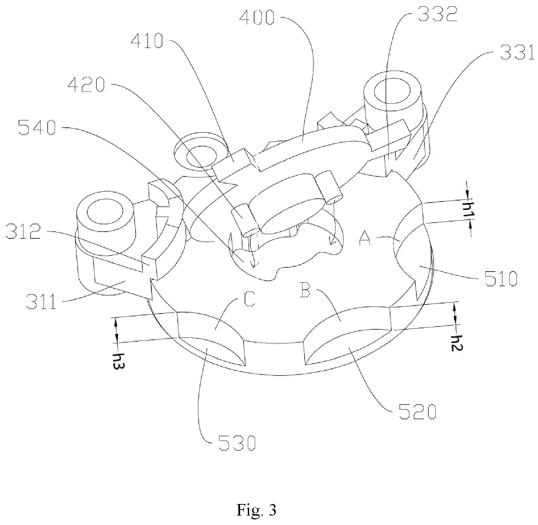

To block the third sectorial plate 331 from being snapped into the locking slot A and the locking slot B and to block the second sectorial plate 321 from being snapped into the locking slot A, as illustrated in Fig. 3, in this embodiment, a fool-proof boss is further provided in each locking slot, and a fool-proof cavity fitted with the sectorial plate is formed between the fool-proof boss and the other end of the locking slot, i.e., a first fool-proof boss 510 extending axially from the end of the locking slot A facing away from the transmission disc 400 towards the inside of the locking slot A is provided in the locking slot A, and a first fool-proof cavity fitted with the first sectorial plate 311 is formed between the first fool-proof boss 510 and the other end of the locking slot; a second fool-proof boss 520 extending axially from the end of the locking slot B facing away from the transmission disc 400 towards the inside of the locking slot B is provided in the locking slot B, and a second fool-proof cavity fitted with the second sectorial plate 321 is formed between the second fool-proof boss 520 and the other end of the locking slot B; and a third fool-proof boss 530 extending axially from the end of the locking slot C facing away from the transmission disc 400 towards the inside of the locking slot C is provided in the locking slot C, and a third fool-proof cavity fitted with the third sectorial plate 331 is formed between the third fool-proof boss 530 and the other end of the locking slot C, wherein an axial height of the first fool-proof boss 510 > an axial height of the second fool-proof boss 520 > an axial height of the third fool-proof boss 530, such that an axial depth h1 of the first fool-proof cavity < an axial depth h2 of the second fool-proof cavity < an axial depth h3 of the third fool-proof cavity, while a thickness of the first sectorial plate 311 < a thickness of the second sectorial plate 321 < a thickness of the third sectorial plate, i.e., the axial depths of the fool-proof cavities and the thicknesses of the sectorial plates are all decreased with increase of the corresponding radial fitting depths, thereby blocking the third sectorial plate 331 from being snapped into the locking slot A and the locking slot B and blocking the second sectorial plate 321 from being snapped into the locking slot A. In other words, by limiting sizes of the locking slots, the first sectorial plate 311 can only be snapped into the locking slot A, the second sectorial plate 321 can only be snapped into the locking slot B, while the third sectorial plate 331 can only be snapped into the locking slot C, thereby realizing one-to-one fitting between the claws 300 and the corresponding locking slots.

In addition, each claw 300 further comprises a stressed portion, wherein the stressed portion projects on a sectorial surface at the side of the sectorial plate facing away from the fixing sleeve 600, the stressed portion extending towards the axial direction of the driven shaft 500 to block partial end face of the driven shaft 500, i.e., the first claw 310 further comprises a first stressed portion 312, the first stressed portion 312 extending towards the axial direction of the driven shaft 500 to block partial end face of the driven shaft 500; the second claw 320 further comprises a second stressed portion 322, the second stressed portion 322 extending towards an axial direction of the driven shaft 500 to block partial end face of the driven shaft 500; and the third claw 330 further comprises a third stressed portion 332, the third stressed portion 332 extending towards the axial direction of the driven shaft 500 to block partial end face of the driven shaft 500. Three toggle blocks 410 are circumferentially provided at uniform intervals at the outer circumferential side of the transmission disc 400, wherein the width of each toggle block 410 is smaller than the distance between two neighboring locking slots, such that when the transmission disc is rotating, the three toggle blocks 410 push the three stressed portions, respectively, to disengage the three claws 300 out of their corresponding locking slots.

Alternatively, the body in this embodiment further comprises a housing 700 that covers one side of the fixing sleeve 600, the housing 700 being secured to the fixing sleeve 600 via bolts; wherein one end of the driven shaft 500 is disposed in the housing 700, the other end of the driven shaft 500 passes out through the fixing sleeve 600 to connect with the hitch 100; the portion of the driven shaft 500 in connection with the hitch 100 is a non-circular surface fitted with a non-circular bore in the hitch 100, thereby realizing that the driven shaft 500 drives the hitch 100 to rotate synchronously. A cover plate 800 is further securely provided in the housing 700, wherein the transmission disc 400 is movably connected onto the cover plate 800 via a plane bearing; the driving shaft 200, after passing through the cover plate 800 and the plane bearing, is in transmission connection with the transmission disc 400, i.e., the portion of the driving shaft 200 fitted with the non-circular bore on the transmission disc 400 is a non-circular surface. Such a configuring enables the driving shaft 200 to actuate the transmission disc 400 to rotate synchronously.

As illustrated in Fig. 1, in this embodiment, the body further comprises resilient members, and the resilient members are torsion springs 620. Each torsion spring 620 is sleeved over a rotating shaft of a claw 300, the rotating shaft being configured for the plug 610 to pass through, one end of the torsion spring 620 being secured on the fixing sleeve 600, and the other end of the torsion spring 620 being secured on a bump block of the claw 300. In this way, when the hitch 100 is in the folded position or the unfolded position, i.e., after the locking slots are rotated to the corresponding claws 300, the claws 300 may be automatically reset under resilience of the torsion springs 620 to thereby lock the driven shaft 500.

In this embodiment, to realize idling of the transmission disc 400 relative to the driven shaft 500, a transmission post 420 extending axially is provided on a disc face of the transmission disc 400, and an arc-shaped transmitting groove 520 is provided coaxially on the driven shaft 500, the transmission post 420 being inserted in the arc-shaped transmitting groove 520. In a status where the claws 300 lock the driven shaft 500, the transmission post 420 is disposed at the middle portion of the arc-shaped transmitting groove 520. When the driving shaft 200 actuates the transmission disc 400 to rotate such that the transmission disc 400 drives the transmission post 420 to move from the middle portion of the arc-shaped transmitting groove 540 to an end portion of the arc-shaped transmitting groove 540, the three claws are released out of the corresponding locking slots, thereby unlocking the driven shaft 500 to rotate; when the transmission post 420 is moving from the middle portion of the arc-shaped transmitting groove 540 to the end portion of the arc-shaped transmitting groove 540, since the transmission post 420 is sliding in the arc-shaped transmitting groove 540, which does not apply a torsion to the driven shaft 500, the transmission disc 400 rotates but the driven shaft 500 does not rotate, thereby realizing idling of the transmission disc 400. After the claws 300 unlock the driven shaft 500 to rotate to continuously drive the transmission disc 400 to rotate, the transmission post 420 pushes a sidewall of the arc-shaped transmitting groove 520 to actuate the driven shaft 500 to rotate, thereby realizing switching of the hitch 100 between the folded position and the unfolded position. When the hitch 100 is in the folded position or the unfolded position, the three claws 300 are respectively snapped into the corresponding locking slots to lock the driven shaft 500 from rotation; afterwards, the driving shaft 200 actuates the transmission disc 400 to rotate reversely such that the transmission post 420 is moving from an end portion of the arc-shaped transmitting groove to the middle portion of the arc-shaped transmitting groove, during which process the driven shaft 500 maintains the locked state without rotation; when the transmission post 420 moves to the middle portion of the arc-shaped transmitting groove 520, the toggle blocks 410 are located between two locking slots so as to be ready for next initiation.

It is noted that when the driven shaft 500 is in the locked state, since the transmission post 420 is located at the middle portion of the arc-shaped transmitting groove, no acting force is transmitted between the transmission post 420 and the driven shaft 500, which further avoids the driving shaft 200 from being stressed all the time, thereby extending service life of the driving shaft 200; particularly, when the driving shaft rotates under actuation by a motor assembly, such a configuration can also extend the service life of the motor assembly.

To enable the transmission disc 400 to actuate the driven shaft 500 to rotate smoothly, in this embodiment, two transmission posts 420 are provided symmetric about the center of the disc face of the transmission disc 400, and correspondingly, two arc-shaped transmitting grooves 540 are provided on the driven shaft 500.

It is understood that in alternative embodiments of the present disclosure, the arc-shaped transmitting grooves may also be provided on the disc face of the transmission disc, while the transmission posts are provided on the driven shaft, the transmission posts being inserted in the arc-shaped transmitting grooves. As such, when the claws lock the driven shaft from rotation, the transmission posts are disposed at respective middle portions of the arc-shaped transmitting grooves; while when the claws unlock the driven shaft to rotate, the transmission posts abut against respective end portions of the arc-shaped transmitting grooves.

It is understood that in alternative embodiments of the present disclosure, an annular mounting plate surrounding the outside of the driven shaft is provided at the inner sidewall of the housing, wherein the claws are rotatably mounted on the mounting plate.

To better understand the technical solution of the present disclosure, the operating principle of the trailer hitch coupler in this embodiment is illustrated below:

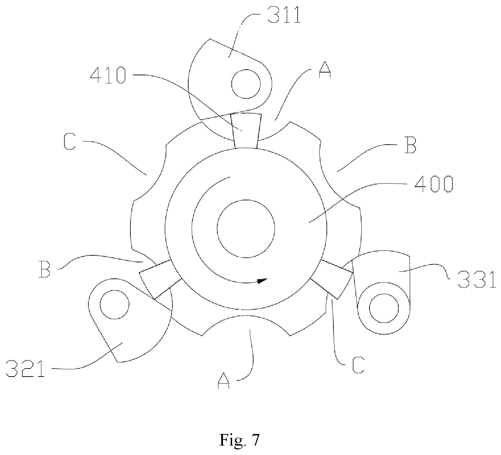

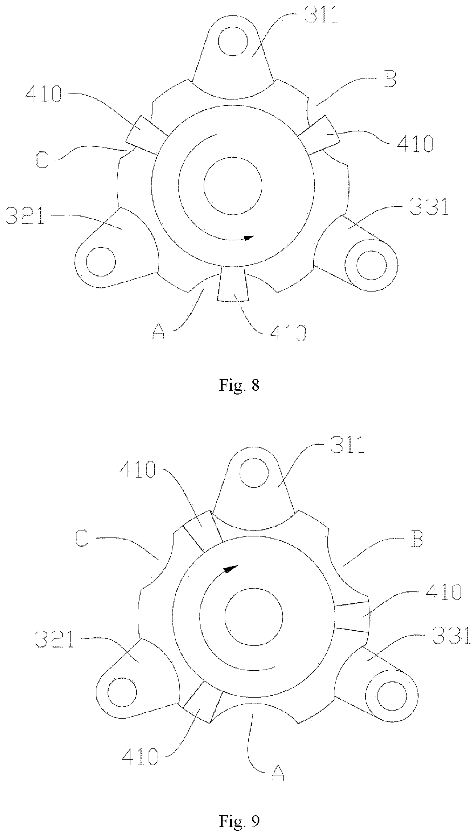

As illustrated in Fig. 6, the three claws 300 are respectively snapped into the corresponding locking slots to lock the driven shaft 500 from rotation. Supposing that the hitch 100 is now in the folded position, as illustrated in Fig. 7, the driving shaft 200 actuates the transmission disc 400 to idle counterclockwise by 30° such that the transmission post 420 moves from the middle portion of the arc-shaped transmitting groove 540 towards the left end portion of the arc-shaped transmitting groove 540, during which process the three toggle blocks 410 push the three claws 300 to rotate clockwise, respectively, causing the three claws 300 to be released out of corresponding locking slots, respectively, i.e., the first claw 310 is released out of the locking slot A, the second claw 320 is released out of the locking slot B, and the third claw 330 is released out of the locking slot C, thereby unlocking the driven shaft 500 to rotate; the driving shaft 200 continuously actuates the transmission disc 400 to rotate counterclockwise by 60°, such that the transmission post 420 abuts against the left end portion of the arc-shaped transmitting groove 540; then, the driving shaft 200 continuously actuates the transmission disc 400 to rotate counterclockwise to drive, via the transmission post 420, the driven shaft 500 to drive the hitch 100 to rotate synchronously counterclockwise till the driven shaft 500 rotates by 180°, at which time, the hitch 100 is in the unfolded position (as illustrated in Fig. 8); meanwhile, the locking slot A corresponds to the first claw 310, the locking slot B corresponds to the second claw 320, and the locking slot C corresponds to the third claw 330; the three claws 300 are re-snapped into the corresponding locking slots under resilience of respective torsion springs 620, thereby locking the driven shaft 500 and preventing sway of the hitch 100 at the unfolded position; afterwards, the driving shaft 200 actuates the transmission disc 400 to idle clockwise by 30° such that the toggles blocks 410 are in the counterclockwise side of the claws 300 (as illustrated in Fig. 9) so as to be ready for next initiation.

Following the same principle, when it is needed to switch the hitch 100 from the unfolded position to the folded position, the driving shaft 200 actuates the transmission disc 400 to idle clockwise by 30 °, such that the transmission post 420 moves from the middle portion of the arc-shaped transmitting groove 540 towards the right end portion of the arc-shaped transmitting groove 540, during which process the three toggle blocks 410 respectively push the three claws 300 to rotate counterclockwise, causing the three claws 300 to be released out of corresponding locking slots, respectively, i.e., the first claw 310 is released out of the locking slot A, the second claw 320 is released out of the locking slot B, and the third claw is released out of the locking slot C, thereby unlocking the driven shaft 500 to rotate; the driving shaft 200 continuously actuates the transmission disc 400 to rotate clockwise by 60°, such that the transmission post 420 abuts against the right end portion of the arc-shaped transmitting groove 540; then, the driving shaft 200 continuously actuates the transmission disc 400 to rotate clockwise to drive, via the transmission post 420, the driven shaft 500 to drive the hitch 100 to rotate synchronously clockwise till the driven shaft 500 rotates by 180°, at which time, the hitch 100 is in the folded position; meanwhile, the locking slot A corresponds to the first claw 310, the locking slot B corresponds to the second claw 320, and the locking slot C corresponds to the third claw 330; the three claws 300 are re-snapped into the corresponding locking slots under resilience of respective torsion springs 620, thereby locking the driven shaft 500 and further preventing sway of the hitch 100 at the folded position; afterwards, the driving shaft 200 actuates the transmission disc 400 to idle counterclockwise by 30° such that the toggle blocks 410 are in the clockwise side of the claws 300 (as illustrated in Fig. 6) so as to be ready for next initiation.

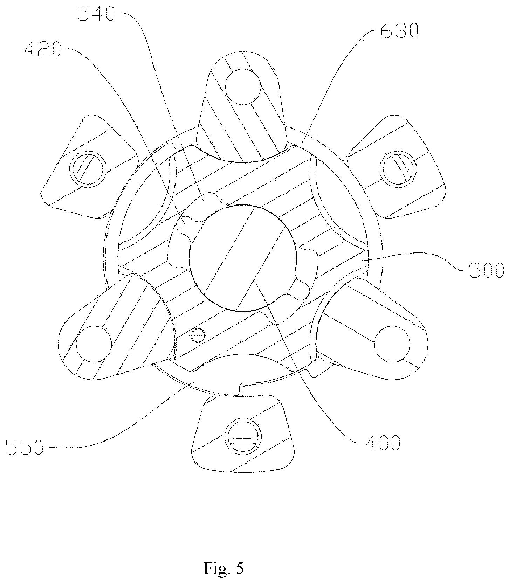

In addition, as illustrated in Figs. 1 and 5, an arc-shaped limit groove 630 is provided at the inner circumferential side of the fixing sleeve 600, and a limit boss 550 is provided at the outer circumferential side of the driven shaft 500 fitted with the fixing sleeve 600, wherein the limit boss 550 moves between two ends of the limit groove 630, thereby limiting a rotating angle of the driven shaft 500 by limiting a rotating angle of the limit boss 550, which defines an initial position and an end position of the driven shaft 500; and the limit boss 550 may be further used to reset the driven shaft 500 after emergency stop.

It is understood that in alternative embodiments of the present disclosure, the arc-shaped limit groove may also be provided at the outer circumferential side of the driven shaft, while the limit boss projects from the inner circumferential side of the fixing sleeve.

Additionally, as illustrated in Fig. 1, Fig. 2, Fig. 10, and Fig. 11, to avoid the hitch 100 from falling due to its own weight, in this embodiment, the driven shaft 500 is provided with a shoulder 560 extending radially outwardly, wherein the limit boss 550 projects from the outer circumferential side of the shoulder 560, while the locking slots are notches provided at the outer circumferential side of the shoulder 560; a perforation and a pin 561 slidably mounted in the perforation are provided on the shoulder 560; two first positioning grooves 640 distributed symmetrically about the center of the fixing sleeve 600 are provided for the fixing sleeve 600; a second positioning groove 430 is provided on the transmission disc 400; when the transmission disc 400 is idling, one end of the pin 561 is inserted into the first positioning grooves 640, and the other end of the pin 561 is located in the perforation without projecting out of the surface of the shoulder 560. Such a configuration may implement circumferential positioning of the driven shaft 500 and avoid falling of the hitch 100 due to its own weight. When the transmission post 420 rotates to one end of the arc-shaped transmitting groove 540, the second positioning groove 430 corresponds to the pin 561, such that the pin 561 is provided a space for moving towards the direction of the transmission disc 400; with synchronous rotation of the driven shaft 500 driven by the transmission disc 400, the pin 561 is brought out of the first positioning groove 640; at this point, one end of the pin 561 does not project above the surface of the shoulder 560, while the other end of the pin 561 is inserted in the second positioning groove 430 so as to lock a relative position between the transmission disc 400 and the driven shaft 500; after the driven shaft 500 rotates in place, i.e., in the folded position or the unfolded position, the pin 561 corresponds to the first positioning grooves 640 again, wherein one end of the pin 561 is inserted into the first positioning grooves 640 again to realize circumferential positioning of the driven shaft 500 again.

Finally, to enhance use experience of the product, in this embodiment, a motor assembly 900 is further provided in the housing 700, wherein the driving shaft 200 is disposed in the housing 700 and connected with an output shaft of the motor assembly 900; the motor assembly 900 drives the driving shaft 200 to rotate such that the hitch 100 switches between the folded position and the unfolded position. The whole process does not need the user to manually actuate the driving shaft 200 to rotate, thereby enhancing use experience of the product.

It is understood that in alternative embodiments of the present disclosure, two claws may be provided, i.e., one of the three claws is eliminated; meanwhile, corresponding locking slots may also be eliminated. The distribution manners, shapes, and sizes of the remaining two claws and two pairs of locking slots do not change.

It is understood that in alternative embodiments of the present disclosure, the rotating axial points of the three claws are located in the same circumference. At this point, the radii of the sectorial plates of the three claws may be designed to be mutually different so as to realize that the radial fitting depths of the three claws as well as their corresponding locking slots are mutually different. Such a configuration may block a claw with a relatively large radial fitting depth from being snapped into the locking slots with a smaller radial fitting depth.

It is understood that in alternative embodiments of the present disclosure, the fool-proof boss may also extend radially from the end of the locking slot proximal to the transmission disc towards the inside of the locking slot; in this case, the fool-proof boss is disposed proximal to the stressed portion, wherein the axial thickness of the fool-proof boss decreases with increase of the radial fitting depth, which is easily contemplated by those skilled in the art based on the embodiments described above and is thus not described in detail here.

It is understood that in alternative embodiments of the present disclosure, two fool-proof bosses may also be provided in one locking slot, wherein a fool-proof cavity is formed between the two fool-proof bosses.

### Second Embodiment

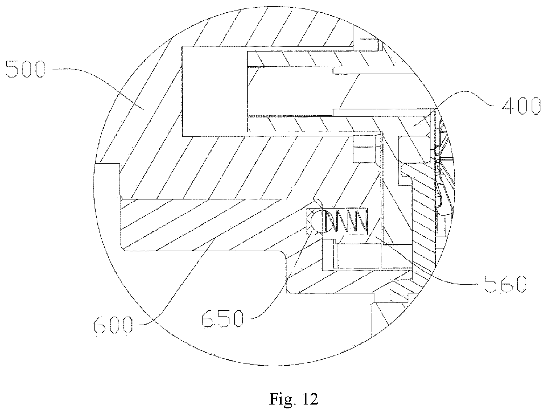

As illustrated in Fig. 12, this embodiment differs from the first embodiment in that a mounting hole is provided on the shoulder 560, a spring is provided in the mounting hole, and a damping ring 650 is provided on an end face of the fixing sleeve 600, wherein a steel ball is press-fitted between the spring and the damping ring 650. With such a configuration, the resistance applied to rotation of the driven shaft may increase due to the damping force between the steel ball and the damping ring 650, thereby preventing falling of the hitch 100 due to its own weight.

It is understood that in alternative embodiments of the present disclosure, the spring may also be mounted on the fixing sleeve, while the damping ring is provided on the shoulder, wherein a steel ball is press-fitted between the spring and the damping ring. Such a configuration may also generate a resistance against rotation of the driven shaft, thereby preventing falling of the hitch due to its own weight.

### Third Embodiment

The third embodiment differs from the first and second embodiments in that no motor assembly is provided in the housing 700; in this case, one end of the driving shaft 200 extends out of the housing 700, such that the driving shaft 200 may also be actuated to rotate to switch the hitch 100 between the folded position and the unfolded position if the user rotates the end of the driving shaft 200 extending outside of the housing 700 by a wrench or by bare hands, thereby reducing manufacturing cost of the product; further, without the motor assembly, failure of the product due to electric fault may be avoided.

What have been described above are only embodiments of the present disclosure; however, the protection scope of the present disclosure is not limited thereto. A person skilled in the art should understand that the present disclosure includes, but not limited to the contents described in the drawings or the

## Claims

1. A trailer hitch coupler, comprising: a body mounted to a vehicle body and a hitch (100), wherein the body comprises a driving shaft (200), a driven shaft (500), a transmission disc (400), and at least two claws (300) rotatably mounted; at least two pairs of locking slots that correspond to the claws (300) in a one-to-one manner and block non-corresponding claws (300) to be snapped into are provided at an outer circumferential side of the driven shaft (500), each pair of the locking slots being distributed symmetrically about the center of the driven shaft (500); the driven shaft (500) drives the hitch (100) to rotate; the transmission disc (400) is provided with toggle blocks (410) in one-to-one correspondence with the claws (300); the driving shaft (200) actuates the transmission disc (400) to idle such that the toggle blocks (410) push the claws (300) to be released out of the locking slots to unlock the driven shaft (500) to rotate; after the claws (300) unlock the driven shaft (500) to rotate, the driving shaft (200) drives, via the transmission disc (400), the driven shaft (500) to rotate so as to switch the hitch (100) between a folded position and an unfolded position; and the body further comprises resilient members for driving the claws (300) to reset, wherein when the hitch (100) is in the folded position or the unfolded position, the resilient members actuate the claws (300) to reset so as to snap the claws (300) in the corresponding locking slots, thereby locking the driven shaft (500) from rotation, **characterized in that** each of the claws (300) includes a sectorial plate (311, 321, 331), wherein radial fitting depths of at least two sectorial plates (311, 321, 331), as well as their corresponding locking slots are mutually different; and wherein in each of the locking slots is provided a fool-proof boss extending axially from one end of the locking slot towards the inside of the locking slot, and a fool-proof cavity fitted with the sectorial plate (311, 321, 331) is formed between the fool-proof boss and the other end of the locking slot, an axial depth of the fool-proof cavity and a thickness of the sectorial plate (311, 321, 331) decrease with increase of a corresponding radial fitting depth.

2. The trailer hitch coupler according to claim 1, **characterized in that** the body further comprises a fixing sleeve (600) sleeved over the driven shaft (500) and mounted to the vehicle body; the claws (300) are rotatably mounted on the fixing sleeve (600); and each of the claws (300) further comprises a stressed portion projecting from a sectorial surface of a side of the sectorial plate (311, 321, 331) facing away from the fixing sleeve (600), wherein the stressed portion extends towards an axial direction of the driven shaft (500) to block partial end face of the driven shaft (500); wherein the corresponding toggle block (410) push the stressed portion to release the sectorial plate (311, 321, 331) out of the corresponding locking slot.

3. The trailer hitch coupler according to claim 2, **characterized in that** the driven shaft (500) has a shoulder (560) extending radially outwardly; a damping ring (650) is provided at one of the shoulder (560) and the fixing sleeve (600), and a spring is provided at the other one of the shoulder (560) and the fixing sleeve (600), a steel ball being press-fitted between the spring and the damping ring (650).

4. The trailer hitch coupler according to claim 2, **characterized in that** the driven shaft (500) has a shoulder (560) extending radially outwardly, a perforation and a pin (561) slidably mounted in the perforation are provided on the shoulder (560), a first positioning groove (640) is provided on the fixing sleeve (600), and a second positioning groove (430) is provided on the transmission disc (400) such that when the transmission disc (400) is idling, one end of the pin (561) is inserted in the first positioning groove (640) so as to circumferentially position the driven shaft (500), and when the transmission disc (400) drives the driven shaft (500) to rotate, the other end of the pin (561) is inserted in the second positioning groove (430) so as to lock a relative position between the transmission disc (400) and the driven shaft (500).

5. The trailer hitch coupler according to claim 2, **characterized in that** a limit groove (630) is provided at one of an inner circumferential side of the fixing sleeve (600) and an outer circumferential side of the driven shaft (500), and a limit boss (550) inserted into the limit groove (630) is provided at the other one of the inner circumferential side of the fixing sleeve (600) and the outer circumferential side of the driven shaft (500), wherein the limit boss (550) moves between two ends of the limit groove (630).

6. The trailer hitch coupler according to any one of claims 1 to 5, **characterized in that** a transmission post (420) is provided on the transmission disc (400), and an arc-shaped transmitting groove (540) is provided coaxially on the driven shaft (500), wherein the transmission post (420) is inserted into the arc-shaped transmitting groove (540), such that when the transmission disc (400) drives the transmission post (420) to move from a middle portion of the arc-shaped transmitting groove (540) to an end portion of the arc-shaped transmitting groove (540), the claws (300) are released out of their corresponding slots.

7. The trailer hitch coupler according to any one of claims 1 to 5, **characterized in that** the body comprises a housing (700) and a motor assembly (900) disposed in the housing (700), wherein the driving shaft (200), the transmission disc (400), and the claws (300) are disposed in the housing (700), and the motor assembly (900) actuates the driving shaft (200) to rotate; wherein one end of the driven shaft (500) is disposed in the housing (700), and the other end of the driven shaft (500) extends outside of the housing (700) to connect with the hitch (100).

8. The trailer hitch coupler according to any one of claims 1 to 5, **characterized in that** the body comprises a housing (700) that covers outside of the transmission disc (400) and the claws (300), wherein one end of the driven shaft (500) is disposed in the housing (700), and the other end of the driven shaft (500) extends out of the housing (700) to connect with the hitch (100); wherein one end of the driving shaft (200) is disposed in the housing (700), and the other end of the driving shaft (200) extends outside of the housing (700).

## Patentansprüche

1. Anhängerkupplung, umfassend: einen an einer Fahrzeugkarosserie montierten Körper und einer Kupplung (100), wobei der Körper eine Antriebswelle (200), eine angetriebene Welle (500), eine Getriebescheibe (400) und mindestens zwei drehbar montierte Klauen (300) umfasst; mindestens zwei Paare von Verriegelungsschlitzen, die den Klauen (300) in einer Eins-zu-Eins-Beziehung entsprechen und nicht entsprechende Klauen (300) daran hindern, eingerastet zu werden, an einer Außenumfangsseite der angetriebenen Welle (500) vorgesehen sind, wobei jedes Paar der Verriegelungsschlitze symmetrisch um die Mitte der angetriebenen Welle (500) verteilt ist; die angetriebene Welle (500) die Kupplung (100) in Drehung versetzt; die Getriebescheibe (400) mit Kniehebelblöcken (410) versehen ist, die eins zu eins den Klauen (300) entsprechen; die Antriebswelle (200) betätigt die Getriebescheibe (400) so, dass die Kniehebelblöcke (410) die Klauen (300) aus den Verriegelungsschlitzen drücken, um die angetriebene Welle (500) für die Drehung zu entriegeln; wobei, nachdem die Klauen (300) die angetriebene Welle (500) zum Drehen entriegelt haben, treibt die Antriebswelle (200) über die Getriebescheibe (400) die angetriebene Welle (500) zum Drehen an, um die Kupplung (100) zwischen einer eingeklappten Position und einer ausgeklappten Position umzuschalten und der Körper umfasst ferner elastische Elemente zum Antreiben der Klauen (300) zum Zurücksetzen, wobei, wenn sich die Kupplung (100) in der eingeklappten Position oder der ausgeklappten Position befindet, die elastischen Elemente die Klauen (300) betätigen, um sie zurückzusetzen, so dass die Klauen (300) in die entsprechenden Verriegelungsschlitze einrasten und dadurch die angetriebene Welle (500) gegen Drehung verriegeln, **dadurch gekennzeichnet, dass** jede der Klauen (300) eine Sektorenplatte (311, 321, 331) umfasst, wobei die radialen Einbautiefen von mindestens zwei Sektorenplatten (311, 321, 331) sowie ihre entsprechenden Verriegelungsschlitze voneinander verschieden sind; und wobei in jedem der Verriegelungsschlitze ein fehlersicherer Vorsprung vorgesehen ist, der sich axial von einem Ende des Verriegelungsschlitzes zur Innenseite des Verriegelungsschlitzes erstreckt, sowie ein fehlersicherer Hohlraum, der mit der Sektorenplatte (311, 321, 331) ausgebildet ist, ist zwischen dem fehlersicheren Vorsprung und dem anderen Ende des Verriegelungsschlitzes gebildet, wobei eine axiale Tiefe des fehlersicheren Hohlraums und eine Dicke der Sektorenplatte (311, 321, 331) mit zunehmender entsprechender radialer Einbautiefe abnehmen.

2. Anhängerkupplung nach Anspruch 1, **dadurch gekennzeichnet, dass** der Körper ferner eine Befestigungshülse (600) umfasst, die über die A angetriebene Welle (500) geschoben und an der Fahrzeugkarosserie befestigt ist; die Klauen (300) drehbar an der Befestigungshülse (600) angebracht sind; und jede der Klauen (300) umfasst ferner einen beanspruchten Abschnitt, der von einer Sektorenfläche einer Seite der Sektorenplatte (311, 321, 331) abgewandten Seite der Befestigungshülse (600) vorsteht, wobei sich der beanspruchte Abschnitt in Richtung einer axialen Richtung der angetriebenen Welle (500) erstreckt, um einen Teil der Stirnfläche der angetriebenen Welle (500) zu blockieren; wobei der entsprechende Kniehebelblock (410) den beanspruchten Abschnitt drückt, um die Sektorenplatte (311, 321, 331) aus dem entsprechenden Verriegelungsschlitz zu lösen.

3. Anhängerkupplung nach Anspruch 2, **dadurch gekennzeichnet, dass** die angetriebene Welle (500) eine sich radial nach außen erstreckende Schulter (560) aufweist; ein Dämpfungsring (650) an einem der Elemente Schulter (560) und Befestigungshülse (600) vorgesehen ist und eine Feder am anderen der Elemente Schulter (560) und Befestigungshülse (600) vorgesehen ist, wobei eine Stahlkugel zwischen der Feder und dem Dämpfungsring (650) eingepresst ist.

4. Anhängerkupplung nach Anspruch 2, **dadurch gekennzeichnet, dass** die angetriebene Welle (500) eine sich radial nach außen erstreckende Schulter (560) aufweist, wobei eine Perforation und ein in der Perforation verschiebbar gelagerter Stift (561) an der Schulter (560) vorgesehen sind, eine erste Positionierungsnut (640) an der Befestigungshülse (600) vorgesehen ist und eine zweite Positionierungsnut (430) an der Getriebescheibe (400) vorgesehen ist, so dass, wenn die Getriebescheibe (400) im Leerlauf ist, ein Ende des Stifts (561) in die erste Positionierungsnut (640) eingeführt wird, um die angetriebene Welle (500) in Umfangsrichtung zu positionieren, und wenn die Getriebescheibe (400) die angetriebene Welle (500) zum Drehen antreibt, wird das andere Ende des Stifts (561) in die zweite Positionierungsnut (430) eingeführt, um eine relative Position zwischen der Getriebescheibe (400) und der angetriebenen Welle (500) zu arretieren.

5. Anhängerkupplung nach Anspruch 2, **dadurch gekennzeichnet, dass** eine Begrenzungsnut (630) an einer der Innenumfangsseiten der Befestigungshülse (600) und einer Außenumfangsseite der angetriebenen Welle (500) vorgesehen ist und ein in die Begrenzungsnut (630) eingeführter Begrenzungsvorsprung (550) an der anderen Seite, entweder an der Innenumfangsseite der Befestigungshülse (600) oder an der Außenumfangsseite der angetriebenen Welle (500), vorgesehen ist, wobei sich der Begrenzungsvorsprung (550) zwischen zwei Enden der Begrenzungsnut (630) bewegt.

6. Anhängerkupplung nach einem der Ansprüche 1 bis 5, **dadurch gekennzeichnet, dass** ein Getriebezapfen (420) an der Getriebescheibe (400) vorgesehen ist und eine bogenförmige Übertragungsnut (540) koaxial an der angetriebenen Welle (500) vorgesehen ist, wobei der Getriebezapfen (420) in die bogenförmige Übertragungsnut (540) eingeführt ist, sodass, wenn die Getriebescheibe (400) den Getriebezapfen (420) antreibt, um sich von einem mittleren Abschnitt der bogenförmigen Übertragungsnut (540) zu einem Endabschnitt der bogenförmigen Übertragungsnut (540) zu bewegen, die Klauen (300) aus ihren entsprechenden Schlitzen gelöst werden.

7. Anhängerkupplung nach einem der Ansprüche 1 bis 5, **dadurch gekennzeichnet, dass** der Körper ein Gehäuse (700) und eine in dem Gehäuse (700) angeordnete Motorbaugruppe (900) umfasst, wobei die Antriebswelle (200), die Getriebescheibe (400) und die Klauen (300) in dem Gehäuse (700) angeordnet sind und die Motorbaugruppe (900) die Antriebswelle (200) in Drehung versetzt; wobei ein Ende der angetriebenen Welle (500) in dem Gehäuse (700) angeordnet ist und das andere Ende der angetriebenen Welle (500) sich außerhalb des Gehäuses (700) erstreckt, um mit der Kupplung (100) verbunden zu werden.

8. Anhängerkupplung nach einem der Ansprüche 1 bis 5, **dadurch gekennzeichnet, dass** der Körper ein Gehäuse (700) umfasst, das die Außenseite der Getriebescheibe (400) und die Klauen (300) abdeckt, wobei ein Ende der angetriebenen Welle (500) in dem Gehäuse (700) angeordnet ist und das andere Ende der angetriebenen Welle (500) sich aus dem Gehäuse (700) heraus erstreckt, um mit der Kupplung (100) verbunden zu werden; wobei ein Ende der Antriebswelle (200) in dem Gehäuse (700) angeordnet ist und das andere Ende der Antriebswelle (200) sich außerhalb des Gehäuses (700) erstreckt.

## Revendications

1. Coupleur d'attelage de remorque, comprenant : un corps monté sur une carrosserie de véhicule et un attelage (100), dans lequel le corps comprend un arbre menant (200), un arbre mené (500), un disque de transmission (400) et au moins deux griffes (300) montées de manière rotative ; au moins deux paires de fentes de verrouillage correspondent aux griffes (300) de manière biunivoque et bloquant les griffes non correspondantes (300) permettant leur encliquetage sont disposées sur un côté circonférentiel extérieur de l'arbre mené (500), chaque paire de fentes de verrouillage étant répartie symétriquement par rapport au centre de l'arbre mené (500) ; l'arbre mené (500) entraîne en rotation l'attelage (100) ; le disque de transmission (400) est doté de blocs basculants (410) en correspondance biunivoque avec les griffes (300) ; l'arbre menant (200) actionne le disque de transmission (400) pour l'entraîner en rotation au ralenti de sorte que les blocs basculants (410) poussent les griffes (300) pour les faire sortir des fentes de verrouillage pour déverrouiller l'arbre menant (500) afin qu'il puisse tourner ; après que les griffes (300) ont déverrouillé l'arbre mené (500) pour permettre sa rotation, l'arbre menant (200) entraîne, via le disque de transmission (400), l'arbre mené (500) en rotation de manière à faire passer l'attelage (100) d'une position pliée à une position dépliée, et vice versa ; et le corps comprend en outre des éléments élastiques pour amener les griffes (300) à se réenclencher, dans lequel lorsque l'attelage (100) est en position pliée ou en position dépliée, les éléments élastiques actionnent les griffes (300) pour qu'elles se réenclenchent de manière à encliqueter les griffes (300) dans les fentes de verrouillage correspondantes, bloquant ainsi la rotation de l'arbre mené (500), **caractérisé en ce que** chacune des griffes (300) inclut une plaque sectorielle (311, 321, 331), dans lequel les profondeurs d'ajustement radiales d'au moins deux plaques sectorielles (311, 321, 331), ainsi que leurs fentes de verrouillage correspondantes, sont mutuellement différentes ; et dans lequel, dans chacune des fentes de verrouillage, un bossage de sécurité s'étend axialement d'une extrémité de la fente de verrouillage vers l'intérieur de la fente de verrouillage, et une cavité de sécurité équipée de la plaque sectorielle (311, 321, 331) est formée entre le bossage de sécurité et l'autre extrémité de la fente de verrouillage, une profondeur axiale de la cavité de sécurité et une épaisseur de la plaque sectorielle (311, 321, 331) diminuent à mesure qu'une profondeur d'ajustement radiale correspondante augmente.

2. Coupleur d'attelage de remorque selon la revendication 1, **caractérisé en ce que** le corps comprend en outre un manchon de fixation (600) manchonné sur l'arbre mené (500) et monté sur la carrosserie de véhicule ; les griffes (300) sont montées de manière rotative sur le manchon de fixation (600) ; et chacune des griffes (300) comprend en outre une partie contrainte faisant saillie à partir d'une surface sectorielle d'un côté de la plaque sectorielle (311, 321, 331) orientée à l'opposé du manchon de fixation (600), dans lequel la partie contrainte s'étend vers une direction axiale de l'arbre mené (500) pour bloquer une face d'extrémité partielle de l'arbre mené (500) ; dans lequel le bloc basculant correspondant (410) pousse la partie contrainte pour faire sortie la plaque sectorielle (311, 321, 331) de la fente de verrouillage correspondante.

3. Coupleur d'attelage de remorque selon la revendication 2, **caractérisé en ce que** l'arbre mené (500) présente un épaulement (560) s'étendant radialement vers l'extérieur ; une bague d'amortissement (650) est disposée au niveau de l'un de l'épaulement (560) et du manchon de fixation (600), et un ressort est disposé au niveau de l'autre de l'épaulement (560) et du manchon de fixation (600), une bille d'acier étant ajustée par pression entre le ressort et la bague d'amortissement (650).

4. Coupleur d'attelage de remorque selon la revendication 2, **caractérisé en ce que** l'arbre mené (500) présente un épaulement (560) s'étendant radialement vers l'extérieur, une perforation et une clavette (561) montée de manière coulissante dans la perforation sont disposées sur l'épaulement (560), une première rainure de positionnement (640) est ménagée sur le manchon de fixation (600), et une seconde rainure de positionnement (430) est ménagée sur le disque de transmission (400) de sorte que lorsque le disque de transmission (400) tourne au ralenti, une extrémité de la clavette (561) soit insérée dans la première rainure de positionnement (640) de manière à positionner de manière circonférentielle l'arbre mené (500), et lorsque le disque de transmission (400) entraîne l'arbre mené (500) en rotation, l'autre extrémité de la clavette (561) est insérée dans la seconde rainure de positionnement (430) de manière à verrouiller une position relative entre le disque de transmission (400) et l'arbre mené (500).

5. Coupleur d'attelage de remorque selon la revendication 2, **caractérisé en ce qu'**une rainure de limite (630) est ménagée au niveau de l'un d'un côté circonférentiel intérieur du manchon fixe (600) et d'un côté circonférentiel extérieur de l'arbre mené (500), et un bossage de limite (550) inséré dans la rainure de limite (630) est disposé au niveau de l'autre du côté circonférentiel intérieur du manchon de fixation (600) et du côté circonférentiel extérieur de l'arbre mené (500), dans lequel le bossage de limite (550) se déplace entre deux extrémités de la rainure de limite (630).

6. Coupleur d'attelage de remorque selon l'une quelconque des revendications 1 à 5, **caractérisé en ce qu'**une tige de transmission (420) est disposée sur le disque de transmission (400), et une rainure de transmission arquée (540) est disposée coaxialement sur l'arbre mené (500), dans lequel la tige de transmission (420) est insérée dans la rainure de transmission arquée (540), de sorte que lorsque le disque de transmission (400) entraîne le déplacement de la tige de transmission (420) d'une partie centrale de la rainure de transmission arquée (540) à une partie d'extrémité de la rainure de transmission arquée (540), les griffes (300) sortent de leurs fentes correspondantes.

7. Coupleur d'attelage de remorque selon l'une quelconque des revendications 1 à 5, **caractérisé en ce que** le corps comprend un carter (700) et un ensemble moteur (900) disposé dans le carter (700), dans lequel l'arbre menant (200), le disque de transmission (400) et les griffes (300) sont disposés dans le carter (700), et l'ensemble moteur (900) actionne l'arbre menant (200) pour l'entraîner en rotation ; dans lequel une extrémité de l'arbre mené (500) est disposée dans le carter (700) et l'autre extrémité de l'arbre mené (500) dépasse du carter (700) pour se raccorder à l'attelage (100).

8. Coupleur d'attelage de remorque selon l'une quelconque des revendications 1 à 5, **caractérisé en ce que** le corps comprend un carter (700) qui recouvre l'extérieur du disque de transmission (400) et des griffes (300), dans lequel une extrémité de l'arbre mené (500) est disposée dans le carter (700), et l'autre extrémité de l'arbre mené (500) dépasse du carter (700) pour se raccorder à l'attelage (100) ; dans lequel une extrémité de l'arbre menant (200) est disposée dans le carter (700) et l'autre extrémité de l'arbre menant (200) dépasse du carter (700).
